# EUROPEAN PATENT APPLICATION

(11) **EP 3 471 240 A1**
(43) Date of publication of application: **17.04.2019**
(21) Application number: 16904610.9
(22) Date of filing: 08.06.2016
(51) Int. Cl.: H02K 1/27, H02K 1/14

(54) **PERMANENT MAGNET MOTOR**

(71) Applicant: Mitsubishi Electric Corporation, Chiyoda-ku Tokyo 100-8310 (JP)
(72) Inventor: TAKIZAWA, Yuji, Tokyo 100-8310 (JP); OKAZAKI, Masafumi, Tokyo 100-8310 (JP); AIDA, Hiroshi, Tokyo 100-8310 (JP)
(74) Representative: Hoffmann Eitle
(86) International application number: PCT/JP2016/067063
(87) International publication number: WO 2017/212575

(57) **Abstract**

In a permanent magnet motor, a stator includes a stator core and a plurality of windings mounted to the stator core. A rotor includes a rotary shaft, a rotor core fixed to the rotary shaft, and a plurality of permanent magnets fixed to the rotor core. The rotor has a plurality of rotor magnetic poles opposed to the stator core. At least one of the rotor magnetic poles is formed of the rotor core. An axial length of the rotor core and an axial length of each of the permanent magnets are larger than an axial length of the stator core.

## Description

### Technical Field

The present invention relates to a permanent magnet motor which is to be used for, for example, an electric power steering device.

### Background Art

In a related-art permanent magnet motor, a rotor core has a plurality of magnet insertion holes. Permanent magnets are inserted into the magnet insertion holes, respectively. Moreover, an axial length of a stator core and an axial length of each of the permanent magnets are equal to each other, and an axial length of the rotor core is larger than the axial length of each of the permanent magnets (see, for example, Patent Literature 1).

### Citation List

### Patent Literature

[PTL 1] JP 2014-165971 A

### Summary of Invention

### Technical Problem

In the related-art permanent magnet motor as described above, the axial length of the rotor core is larger than the axial length of each of the permanent magnets. Thus, a gap is formed in each of the magnet insertion holes, and a magnetic resistance generated between walls of the magnet insertion hole opposed to each other through the gap becomes smaller than a magnetic resistance in the axial direction around opposed core ends of the rotor core. Therefore, a leakage magnetic flux circulating in the rotor core is increased, and a main magnetic flux of the permanent magnets is reduced, with the result that the torque is also reduced.

The present invention has been made to solve the problem described above, and has an object to obtain a permanent magnet motor having at least one of rotor magnetic poles formed of a rotor core, and being capable of increasing a main magnetic flux contributing to torque without increase in axial length of the entirety of the motor.

### Solution to Problem

According to one embodiment of the present invention, there is provided a permanent magnet motor, including: a stator including a stator core and a plurality of windings mounted to the stator core; and a rotor including a rotary shaft, a rotor core fixed to the rotary shaft, and a plurality of permanent magnets fixed to the rotor core, having a plurality of rotor magnetic poles opposed to the stator core, and being configured to rotate about the rotary shaft, wherein at least one of the rotor magnetic poles is formed of the rotor core, and wherein an axial length of the rotor core and an axial length of each of the permanent magnets are larger than an axial length of the stator core.

### Advantageous Effects of Invention

In the permanent magnet motor according to one embodiment of the present invention, the axial length of the rotor core and the axial length of each of the permanent magnets are larger than the axial length of the stator core. Therefore, in the permanent magnet motor having at least one of the rotor magnetic poles formed of the rotor core, the main magnetic flux contributing to the torque can be increased without increase in axial length of the entirety of the motor.

### Brief Description of Drawings

FIG. 1 is a sectional view of a permanent magnet motor according to a first embodiment of the present invention, which is taken along an axis of the motor.
FIG. 2 is a sectional view for illustrating a cross section of the rotor of FIG. 1, which is taken along a direction perpendicular to an axis of the rotor.
FIG. 3 is a sectional view for illustrating a first modification example of the structure of the rotor in the first embodiment.
FIG. 4 is a sectional view for illustrating a second modification example of the structure of the rotor in the first embodiment.
FIG. 5 is a sectional view for illustrating a third modification example of the structure of the rotor in the first embodiment.
FIG. 6 is a sectional view for illustrating a cross section of a stator core of a permanent magnet motor according to a second embodiment of the present invention, which is taken along a direction perpendicular to an axis of the stator core.
FIG. 7 is a sectional view for illustrating a first modification example of the structure of the stator core in the second embodiment.
FIG. 8 is a sectional view for illustrating a second modification example of the structure of the stator core in the second embodiment.
FIG. 9 is a sectional view for illustrating a permanent magnet motor according to a third embodiment of the present invention, which is taken along an axis of the motor.

### Description of Embodiments

Now, embodiments of the present invention are described with reference to the drawings.

### First Embodiment

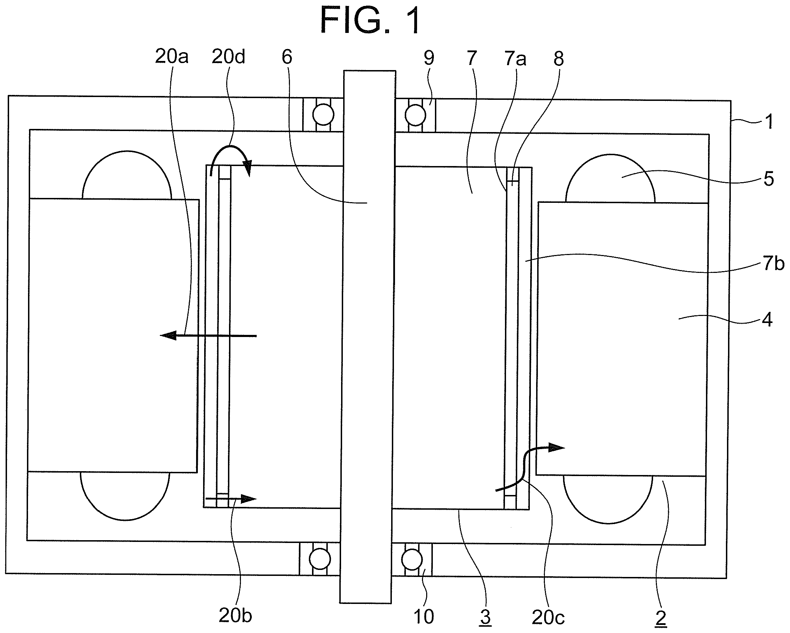

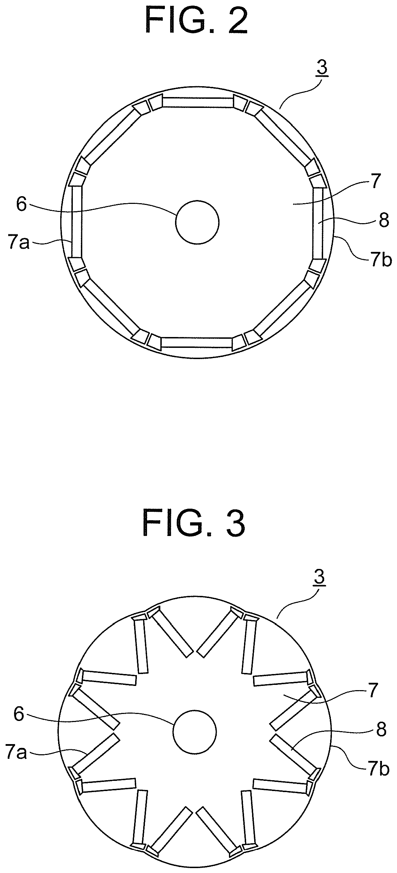

FIG. 1 is a sectional view of a permanent magnet motor according to a first embodiment of the present invention, which is taken along an axis of the motor. FIG. 2 is a sectional view for illustrating a cross section of the rotor of FIG. 1, which is taken along a direction perpendicular to an axis of the rotor. In FIG. 1 and FIG. 2, a stator 2 being an armature is fixed to an inner peripheral surface of a housing 1 having a cylindrical shape. A rotor 3 is provided on an inner side of the stator 2. A magnetic gap is defined between the stator 2 and the rotor 3.

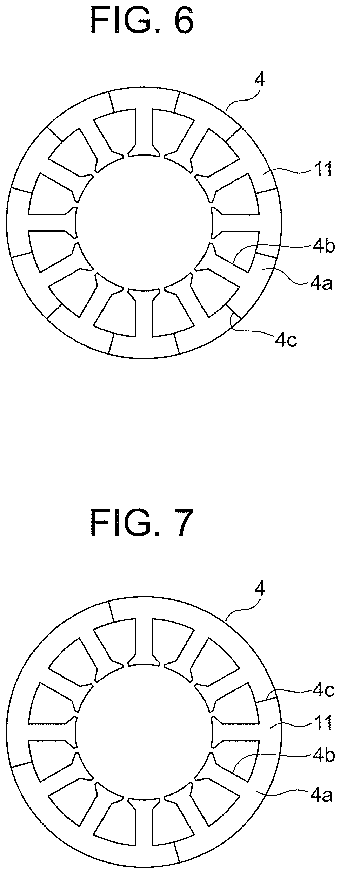

The stator 2 includes a stator core 4 and a plurality of windings 5. The stator core 4 has a cylindrical shape and is formed of a magnetic body. The plurality of windings 5 are mounted to the stator core 4. The stator core 4 is formed, for example, by laminating a plurality of electromagnetic steel plates. Moreover, the stator core 4 includes a core back 4a (see FIG. 6) having an annular shape and a plurality of teeth 4b (see FIG. 6) projecting radially inward from the core back 4a. The teeth 4b are arrayed at equal intervals in a circumferential direction of the stator core 4.

A slot is formed between the adjacent teeth 4b. The windings 5 are wound around the teeth 4b, and are accommodated in the slots. Coil ends of the windings 5 are arranged at both ends of the stator 2 in an axial direction.

The rotor 3 includes a rotary shaft 6, a rotor core 7, and a plurality of permanent magnets 8. The rotor core 7 has a cylindrical shape, and is fixed to the rotary shaft 6. The plurality of permanent magnets 8 each have a plate shape, and are fixed to the rotor core 7. The rotor 3 is configured to rotate about the rotary shaft 6. The rotary shaft 6 is rotatably supported by the housing 1 through intermediation of a first bearing 9 and a second bearing 10. The rotor core 7 is formed, for example, by laminating a plurality of electromagnetic steel plates.

The rotor core 7 has a plurality of magnet insertion holes 7a. The magnet insertion holes 7a are arrayed at equal intervals in a circumferential direction of the rotor core 7. The permanent magnets 8 are inserted into the magnet insertion holes 7a, respectively. With this, on an outer peripheral surface of the rotor 3 opposed to the stator core 4, there are formed a plurality of rotor magnetic poles 7b which are formed of the rotor core 7 made of a soft magnetic body.

An axial length (dimension in the up-and-down direction of FIG. 1) of the rotor core 7 is larger than an axial length (dimension in the up-and-down direction of FIG. 1) of the stator core 4. For example, when a thickness of each electromagnetic steel plate forming the rotor core 7 is equal to a thickness of each electromagnetic steel plate forming the stator core 4, the number of the laminated electromagnetic steel plates of the rotor core 7 is larger than the number of the laminated electromagnetic steel plates of the stator core 4.

A length of each of the permanent magnets 8 of the rotor 3 in the axial direction, that is, an axial length (dimension in the up-and-down direction of FIG. 1) of each of the permanent magnets 8 is larger than the axial length of the stator core 4 and is smaller than the axial length of the rotor core 7.

In such permanent magnet motor, the axial length of each of the permanent magnets 8 is smaller than the axial length of the rotor core 7, and hence a main magnetic flux (arrow 20a of FIG. 1) contributing to torque is reduced by the amount of a leakage magnetic flux (arrow 20b of FIG. 1) generated through the magnet insertion holes 7a. However, the axial length of each of the permanent magnets 8 is larger than the axial length of the stator core 4. Thus, the amount of a main magnetic flux (arrow 20c of FIG. 1) flowing to the stator core through a surface of the rotor core 7 can be increased without increase in axial length of the stator core 4, thereby being capable of increasing output of the motor.

Moreover, the coil ends are provided at the both ends of the stator 2 in the axial direction, and hence the axial length of the stator 2 is larger than the axial length of the rotor 3. Therefore, the axial length of the entirety of the motor is determined by the axial length of the stator 2. Only the rotary shaft 6 is present at the portions of the rotor 3 opposed to the coil ends. Thus, when the rotor core 7 and the permanent magnets 8 are arranged in this space, the output of the motor can be increased without increase in axial length of the motor.

In particular, with an electric power steering motor for which the weight affecting fuel consumption and the capability of mounting to an engine room are considered important, the output can be increased while preventing increase in weight and increase in motor size, thereby being capable of reducing torque ripple and improving assist torque for a steering force by a driver. Therefore, a steering feeling of a driver is improved, thereby being capable of achieving comfortable steering.

The windings 5 may be any of concentrated windings and distributed windings. In the case of the distributed windings having a larger coil end length than that of the concentrated windings, the space opposed to the coil ends is larger. Thus, the distributed windings are particularly effective.

As described above, with the configuration of the first embodiment, in the permanent magnet motor in which the rotor magnetic poles 7b are formed of the rotor core 7, the main magnetic flux contributing to the torque can be increased without increase in axial length of the entirety of the motor.

Moreover, in the first embodiment, the axial length of each of the permanent magnets 8 is larger than the axial length of the stator core 4, but the main magnetic flux 20c flows in the axial direction through part of the rotor core 7 on the rotor surface to the stator core 4. Generally, in a rotor which is called "surface magnet rotor", that is, a rotor having no rotor core on the rotor surface, magnetic permeability of the gap is extremely smaller than that of the core, and hence the effect that the main magnetic flux can be increased is small. However, with the magnet-embedded rotor according to the first embodiment, the effect that the main magnetic flux can be increased is large.

Further, when the axial length of each of the permanent magnets 8 is smaller than the axial length of the rotor core 7 as described above, covers (not shown) made of a non-magnetic material may not be provided on both axial ends of the rotor core 7. With this, removal of the permanent magnets 8 to the outside of the rotor 3 can be prevented without use of an adhesive or the like to fix the permanent magnets 8 to be magnetized inside the rotor core 7. Thus, handling of the permanent magnets 8 before magnetization at the time of assembly is facilitated.

The axial length of each of the permanent magnets 8 may be set equal to the axial length of the rotor core 7 or set larger than the axial length of the rotor core 7.

When the axial length of each of the permanent magnets 8 is larger than the axial length of the rotor core 7, a gap having a small magnetic resistance is not present in each of the magnet insertion holes 7a, and the leakage magnetic flux (arrow 20d of FIG. 1) flowing around both end portions of the rotor core 7 is generated. However, the magnetic resistance is large, and hence the amount of leakage magnetic flux can be reduced, thereby being capable of suppressing reduction in main magnetic flux contributing to the torque. Moreover, each of the permanent magnets 8 is long, and hence the output of the motor can be increased without increase in axial length of the stator core 4. Further, the rotor core 7 and each of the permanent magnets 8 are increased in length with use of the space opposed to the coil ends, thereby being capable of increasing the output of the motor without increase in axial length of the motor.

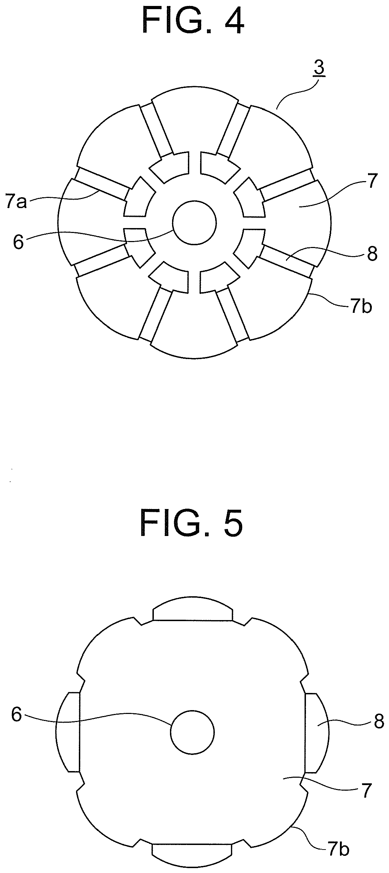

FIG. 3 is a sectional view for illustrating a first modification example of the structure of the rotor 3. FIG. 4 is a sectional view for illustrating a second modification example of the structure of the rotor 3. FIG. 5 is a sectional view for illustrating a third modification example of the structure of the rotor 3. The configuration of the first embodiment is applicable not only to the magnet-embedded rotors as illustrated in FIG. 2 to FIG. 4 but also to a consequent rotor having one pole formed of the rotor core 7 as illustrated in FIG. 6. Thus, it is apparent that the effect that the main magnetic flux can be increased can be attained.

### Second Embodiment

Next, FIG. 6 is a sectional view for illustrating a cross section of the stator core 4 of a permanent magnet motor according to a second embodiment of the present invention, which is taken along a direction perpendicular to an axis of the stator core 4. In the second embodiment, the stator core 4 is formed of a plurality of segment cores 11 divided in the circumferential direction, and the plurality of segment cores 11 are integrated by being assembled to form an annular shape. Adjacent segment cores 11 are connected and fixed to each other by, for example, welding at a division surface 4c. In FIG. 6, the stator core 4 is divided into the segments cores 11 so as to correspond to the respective teeth 4b. Other configurations are the same as those of the first embodiment.

In such stator core 4, axial positions of the stator core 4 may be deviated in the up-and-down direction due to positional displacement caused at the time of integration of the segment cores 11 and variation in layer thickness due to thickness deviation of the electromagnetic steel plates.

However, as in the first embodiment, the axial length of the rotor core 7 and the axial length of each of the permanent magnets 8 are larger than the axial length of the stator core 4. Thus, when the rotor length is set in consideration of the deviation in axial position of those, the both ends of the stator core 4 in the axial direction are always opposed to the rotor core 7. Therefore, the main magnetic flux is prevented from being less liable to flow, thereby being capable of alleviating the positioning accuracy given at the time of assembly and alleviating the deviation in plate thickness of the electromagnetic steel plates.

In particular, for a vehicle motor to be supplied and manufactured globally around the world, there can be attained the effect that the manufacturing equipment can be simplified and the effect that supply cost can be reduced, in addition to the effect of the first embodiment.

FIG. 7 is a sectional view for illustrating a first modification example of the structure of the stator core 4 in the second embodiment. In FIG. 7, the stator core 4 is divided in the circumferential direction into the segment cores 11 each having three teeth 4b. Even with such configuration, the effect similar to that of the configuration of FIG. 6 can be obtained.

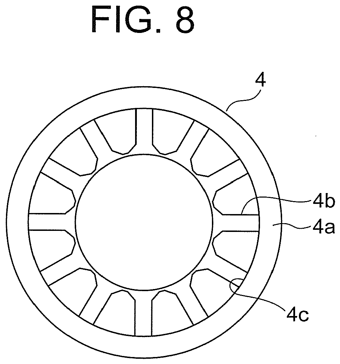

Moreover, FIG. 8 is a sectional view for illustrating a second modification example of the structure of the stator core 4 in the second embodiment. In FIG. 8, the stator core 4 is divided into the core back 4a having an annular shape, and the teeth 4b.

Even in the stator core 4 divided in the radial direction as illustrated in FIG. 8, axial positions of the stator core 4 are significantly deviated in the up-and-down direction due to positioning displacement at the time of integrating the core back 4a and the teeth 4b and due to variation in layer thickness caused by plate thickness deviation of the electromagnetic steel plates.

However, the axial length of the rotor core 7 and the axial length of each of the permanent magnets 8 are larger than the axial length of the stator core 4, and hence the effect similar to that of the configuration of FIG. 6 can be obtained.

The number of segments of the stator core 4 is not limited to the example described above.

Moreover, the stator core 4 may be divided in both the circumferential direction and the radial direction.

### Third Embodiment

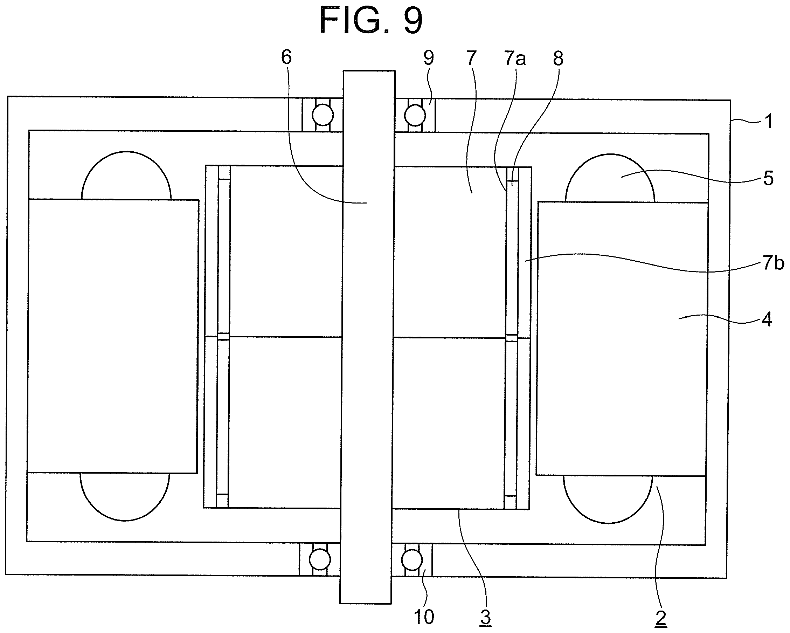

Next, FIG. 9 is a sectional view of a permanent magnet motor according to a third embodiment of the present invention, which is taken along an axis of the motor. In the third embodiment, the rotor 3 is divided into a plurality of stages in the axial direction, and is skewed. Other configurations are the same as those of the first embodiment and the second embodiment. Description is made of a two-stage skewed rotor as an example.

In general, with a rotor having stages and skews, pulsation caused by rotation such as cogging torque and torque ripple can be reduced. However, in a case in which the stator core and the rotor core have the same length, when the stator core and the rotor core are deviated in the axial direction, an end portion of the stator core is not opposed to the rotor, with the result that the pulsation having been cancelled out with the two stages including upper and lower stages appears prominently.

With regard to such phenomenon, in the third embodiment, the axial lengths of the rotor core 7 and the permanent magnets 8 are larger than the axial length of the stator core 4. Therefore, the axial deviation is absorbed, and the adverse influence of the pulsation can be reduced.

In particular, in an electric power steering motor, through the reduction in adverse influence of the pulsation, the vibration noise can be reduced, and the steering feeling can be improved, thereby being capable of providing comfortable steering for a driver.

A multi-layer multi-phase winding structure may be given to the stator 2, and the energization phases of the multi-layer windings may be deviated from one another to cancel the torque ripple. With this configuration, the pulsation can be further reduced, which is effective for reduction in noise and vibration at the time of motor driving of a hybrid vehicle and an electric vehicle for which demand is steeply increasing.

Moreover, in the example, the rotor 3 is arranged on an inner side of the stator 2. However, the present invention is applicable also to a motor in which a rotor is provided on an outer side of a stator.

## Claims

1. A permanent magnet motor, comprising:
a stator including a stator core and a plurality of windings mounted to the stator core; and
a rotor including a rotary shaft, a rotor core fixed to the rotary shaft, and a plurality of permanent magnets fixed to the rotor core, having a plurality of rotor magnetic poles opposed to the stator core, and being configured to rotate about the rotary shaft,
wherein at least one of the rotor magnetic poles is formed of the rotor core, and
wherein an axial length of the rotor core and an axial length of each of the permanent magnets are larger than an axial length of the stator core.

2. The permanent magnet motor according to claim 1, wherein the stator core is divided into a plurality of segments in a circumferential direction of the stator core and is integrated.

3. The permanent magnet motor according to claim 1 or 2, wherein the stator core is divided into a plurality of segments in a radial direction of the stator core and is integrated.

4. The permanent magnet motor according to any one of claims 1 to 3, wherein the rotor is divided into a plurality of stages in an axial direction and is skewed.
